Europäisches Patentamt

European Patent Office

Office européen des brevets

(19)

(11) Numéro de publication : **0 157 662**
**B1**

(12) **FASCICULE DE BREVET EUROPÉEN**

(45) Date de publication du fascicule du brevet :
20.09.89

(51) Int. Cl.⁴ : **G 01 V 1/40**, G 01 V 1/16

(21) Numéro de dépôt : **85400306.8**

(22) Date de dépôt : **20.02.85**

(54) **Dispositif de réception d'ondes acoustiques dans un puits.**

(30) Priorité : 28.02.84 FR 8403197

(43) Date de publication de la demande :
09.10.85 Bulletin 85/41

(45) Mention de la délivrance du brevet :
20.09.89 Bulletin 89/38

(84) Etats contractants désignés :
DE GB IT NL

(56) Documents cités :
DE--A-- 3 305 189
FR--A-- 2 138 335
FR--A-- 2 486 997
US--A-- 3 354 983
US--A-- 3 811 529

(73) Titulaire : INSTITUT FRANCAIS DU PETROLE
4, Avenue de Bois-Préau
F-92506 Rueil-Malmaison Cedex (FR)

COMPAGNIE GENERALE DE GEOPHYSIQUE
6, rue Galvani B.P. 56
F-91301 Massy Cedex (FR)

(72) Inventeur : Guerendel, Philippe
5, rue de la Fidélité
F-75010 Paris (FR)
Inventeur : Naville, Charles
8, avenue R. Garnier
F-91300 Massy (FR)
Inventeur : Laurent, Jean
5, rue du Moulle
Morainvilliers F-78630 Orgeval (FR)
Inventeur : Dedole, Pascal
12, boulevard Léon Louesse
F-92500 Rueil Malmaison (FR)

(74) Mandataire : Kermarrec, Michelle et al
Institut Français du Pétrole 4, avenue de Bois-Préau
F-92502 Rueil-Malmaison (FR)

## Description

L'invention a pour objet un dispositif de réception d'ondes acoustiques dans des puits ou forages, adapté en particulier à la prospection sismique.

Les dispositifs de réception d'ondes acoustiques utilisés dans Les puits sont généralement inclus dans une sonde constituée d'un corps allongé pourvu de moyens d'ancrage escamotables associés à des moyens moteurs.

Les moyens d'ancrage peuvent être constitués de bras pivotants et/ou de patins d'ancrage amenés en contact de la paroi au moyen de vérins associés à des moyens de pression hydrauliques commandés depuis la surface. Suivant un premier mode de réalisation, Les moyens d'ancrage sont des bras pivotants disposés d'un même côté du corps de la sonde. Leur ouverture pour l'action des ressorts et leur appui contre la paroi du puits ont pour effet que le corps de la sonde est déporté latéralement vers la paroi opposée où un patin de mesure est amené au contact des formations géologiques. Une telle sonde est décrite, par exemple, dans le brevet français N° 2138335. Le corps de la sonde est maintenu au centre du puits par écartement symétrique de transducteurs amenés au contact d'une paroi par le coulissement radial de tiges de plusieurs vérins ou par des ressorts et par écartement vers la paroi apposée de sabots d'ancrage déplacés par d'autres vérins et par ouverture de bras d'ancrage. De tels dispositifs sont décrits dans le brevet Us n° 354983 où la demande de brevet européen n° 148667 bénéficiant de la priorité du 9 décembre 1983.

Les transducteurs peuvent être fixés rapidement à leurs moyens de déplacement radial ou bien encore y être connectés par l'intermédiaire d'un bloc d'élastomère.

Dans les cas où la sonde est utilisée dans le cadre d'opérations de prospection sismique on vérifie aisément que les caractéristiques du corps de sonde ainsi que son mode de couplage aux terrains, interviennent dans les résultats des mesures. La masse du corps de la sonde est en général assez élevée. Elle l'est d'autant plus que l'on emploie des bras ou des vérins d'ancrage et des moyens moteurs proportionnés pour engendrer des forces d'appui importantes contre la paroi du puits, de manière à améliorer le coefficient de couplage de la sonde. Compte tenu des couplages existant généralement entre les capteurs et le corps de sonde, la masse de celui-ci intervient directement dans la fréquence de résonance desdits capteurs. On montre et on vérifie expérimentalement en effet que la fréquence de résonance des capteurs augmente quand la masse totale du corps et des capteurs diminue et quand le couplage entre la sonde et la paroi du puits est plus raide, et aussi que la réponse en fréquence des capteurs s'améliore lorsque la masse totale diminue.

Le couplage des capteurs au corps de la sonde a également pour inconvénient que les ondes de surface qui sont transmises par le fluide remplissant généralement le puits sont détectées par lesdits capteurs et viennent masquer des arrivées d'ondes sismiques intéressantes.

En outre, dans le cas où le contact entre les capteurs et la paroi du puits est obtenu par un décentrement de la sonde, la réponse des capteurs en fréquence est modifiée. Elle est différente selon qu'ils sont disposés dans le plan de symétrie de la sonde en appui ou perpendiculairement à ce plan.

Le dispositif de réception selon l'invention telle que revendiquée dans la revendication 1, permet d'éviter les inconvénients mentionnés ci-dessus. Il est adapté à être associé à une sonde descendue dans un puits ou forage, à l'extrémité d'un câble et pouvant être plaquée contre la paroi du puits par ouverture de bras d'ancrage, et comporte au moins un ensemble récepteur et un vérin associé à des moyens de pression pour déplacer chaque ensemble récepteur entre une position de retrait et une position où il est couplé avec la paroi du puits. Le dispositif est caractérisé en ce que chaque ensemble récepteur a son axe principal d'oscillation orienté suivant une direction perpendiculaire à l'axe du vérin, le dispositif comportant des éléments de suspension flexibles directifs pour amortir les vibrations transmises par la sonde à chaque ensemble récepteur au niveau suivant cet axe principal d'oscillation.

Suivant un premier mode de réalisation du dispositif, le corps du vérin est solidaire de la sonde, à une extrémité et le piston du vérin est connecté à l'ensemble récepteur par l'intermédiaire d'un manchon adapté à coulisser sur le corps du vérin et d'un élément de suspension flexible comportant une gaine tubulaire de section supérieure à celle du manchon qui délimite avec celui-ci et l'ensemble récepteur une chambre annulaire et les moyens de pression comportent un système hydraulique pour la manoeuvre du vérin.

Suivant un second mode de réalisation, chaque ensemble récepteur est solidaire du piston du vérin, le corps de celui-ci étant suspendu dans une cavité de la sonde par les éléments flexibles directifs de suspension.

Dans l'un et l'autre cas, Les éléments de connexion flexibles interposés permettent de réduire considérablement l'influence de la masse du corps de sonde sur la courbe de réponse en fréquence du capteur et la transmission à celui-ci des vibrations parasites.

D'autres caractéristiques et avantages du dispositif selon l'invention apparaîtront à la lecture de la description de plusieurs modes de réalisation choisis à titre d'exemples non limitatifs, en se référant aux dessins annexés sur lesquels :

la figure 1 représente schématiquement un corps de sonde plaqué contre la paroi d'un puits par ouverture d'un bras d'ancrage ;

la figure 2 représente schématiquement en vue de dessus un corps de sonde muni d'un seul bras d'ancrage ;

la figure 3 représente schématiquement en vue de dessus un corps de sonde excentré par l'ouverture de deux bras d'ancrage ;

la figure 4 représente une vue schématique en coupe transversale d'un premier mode de réalisation d'un ensemble de réception, le capteur étant en position de retrait ;

la figure 5 représente l'ensemble de réception de la figure 4, le capteur étant en position de couplage avec la paroi ;

la figure 6 représente une vue schématique en coupe transversale d'une variante du mode de réalisation des figures 4 et 5 ;

la figure 7 représente, également en coupe transversale, un second mode de réalisation d'un ensemble de réception ;

la figure 8 représente schématiquement en perspective l'ensemble de réception de la figure 7 ;

la figure 9 représente schématiquement une variante du mode de réalisation des figures 7 et 8 ;

la figure 10 représente schématiquement en coupe transversale un troisième mode de réalisation d'un ensemble de réception ;

la figure 11 montre la disposition et l'orientation dans l'espace de trois ensembles de réception pouvant être avantageusement disposés dans le même corps de sonde ;

la figure 12 représente une disposition de trois ensembles de réception par rapport au corps d'une sonde dans le cas ou celle-ci possède un seul bras d'ancrage ;

la figure 13 représente une disposition analogue de trois ensembles de réception dans le corps d'une sonde, dans le cas ou celle-ci possède deux bras d'ancrage dont les plans de pivotement respectifs sont orthogonaux ; et

la figure 14 représente le schéma synoptique d'un système pneumatique qui peut être utilisé pour améliorer le couplage des capteurs contre la paroi du puits, dans le mode de réalisation de la figure 6.

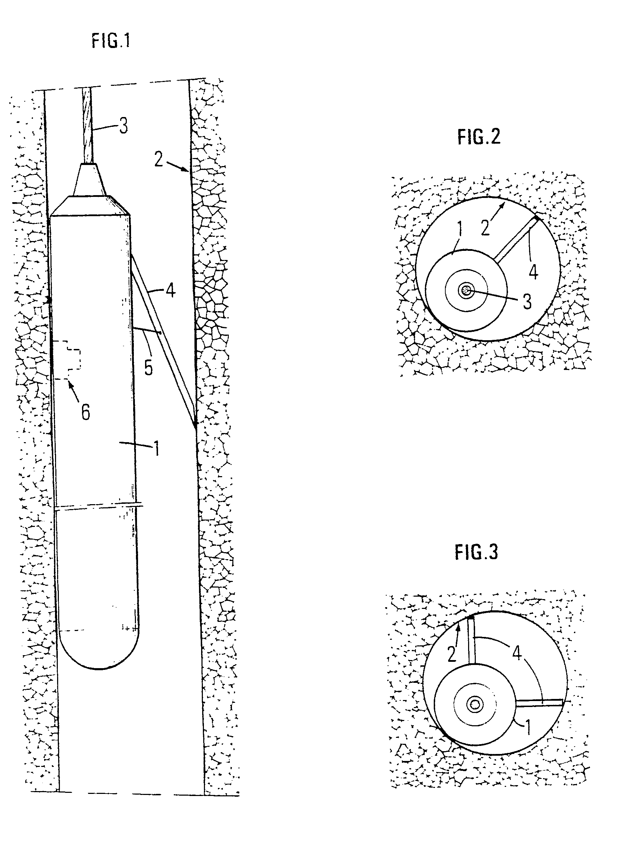

La sonde représentée à la figure 1 comporte un corps tubulaire 1 descendu depuis la surface à l'intérieur d'un puits ou d'un forage 2, à l'extrémité d'un câble multi-fonction 3 adapté à supporter la sonde et contenant des fils d'alimentation électrique et des conducteurs pour la transmission des signaux de commande à différents appareils contenus dans le corps 1 de la sonde et des données produites par ceux-ci vers une installation en surface. La sonde est munie d'au moins un bras d'ancrage 4 adapté à pivoter à l'une de ses extrémités par rapport au corps, ce bras pouvant être écarté par déplacement de la tige 5 d'un vérin au moyen d'un système hydraulique d'un type connu et non représenté.

Le système hydraulique peut comporter par exemple un moteur électrique adapté, au moyen d'une vis sans fin, à déplacer en translation un piston à l'intérieur d'un cylindre rempli d'huile, et un circuit hydraulique associé à des moyens d'équilibrage de pression statique et des moyens de limitation d'éventuelles surpressions, pour faire communiquer les chambres du cylindre, de part et d'autre du piston, avec les extrémités opposées du vérin actionnant le bras d'ancrage. Un tel système est décrit par exemple en détail dans le brevet français 2.501.380.

En s'écartant, le bras vient s'appuyer contre la paroi du puits et déplace le corps jusqu'à ce qu'il vienne au contact de la paroi opposée.

La sonde peut comporter un ou plusieurs vérins disposés suivant une même génératrice du corps (Fig. 2) ou bien au moins une paire de bras 4 qui peuvent pivoter dans deux plans différents (Fig. 3) et qui en s'appuyant contre la paroi du puits repoussent le corps 1 vers une zone de contact située sensiblement dans le plan médiateur.

Dans la zone de contact avec la paroi du puits, le corps 1 comporte au moins une cavité 6 pour un ensemble de réception R.

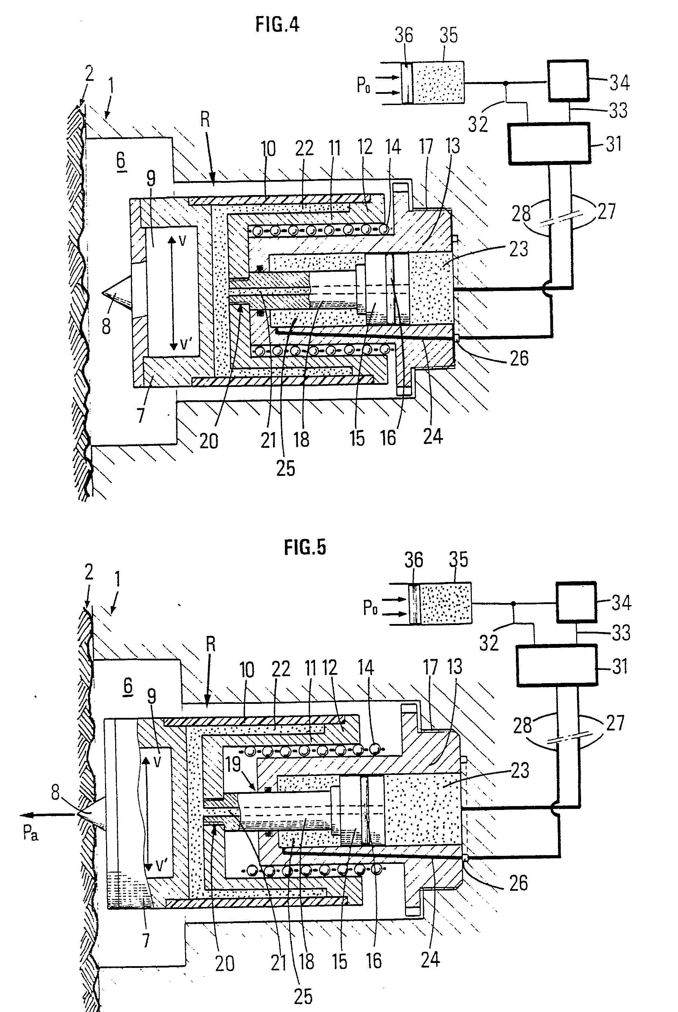

Suivant le mode de réalisation des figures 4 à 6, chaque ensemble de réception R comporte un boîtier 7 pourvu d'une face de contact contre la paroi du puits. Cette face peut être pourvue d'une pointe 8 pour améliorer le couplage. A l'intérieur du boîtier 7 est disposé un capteur sismique 9. Le boîtier 7 est fixé à une première extrémité d'une gaine 10 réalisée en un matériau élastique tel qu'un élastomère ou un matériau composite à base de fibres. Un manchon rigide 11, de section inférieure à celle de la gaine, est disposé coaxialement à l'intérieur de celle-ci.

Il est fermé à son extrémité la plus proche du boîtier 7 et ouvert à son extrémité opposée. Du côté de son extrémité ouverte, il est pourvu vers l'extérieur d'un épaulement 12 sur lequel vient s'emboîter l'extrémité de la gaine 10. Un cylindre 13, de section inférieure à celle du manchon 11 est disposé à l'intérieur de celui-ci.

Un moyen de guidage à frottement réduit, tel qu'un roulement à billes 14 par exemple, peut être disposé entre le manchon 11 et le cylindre 13 pour faciliter la translation relative de l'un par rapport à l'autre. Le cylindre 13 est pourvu d'un alésage intérieur où peut coulisser un piston 15. Les deux parties de l'alésage, de part et d'autre du piston 15, sont isolées l'une de l'autre par un joint d'étanchéité 16 disposé sur le pourtour de celui-ci. Le cylindre 13 est fermé à son extrémité la plus proche du fond du manchon 11 et ouvert à son extrémité opposée. Celle-ci est pourvue d'une partie filetée adaptée à venir se visser dans un logement 17 ménagé dans le fond de la cavité 6 du corps de la sonde. Le piston 15 est pourvu d'une tige 18 filetée à son extrémité et la paroi terminale au fond du cylindre 13 est pourvue d'une ouverture 19 de section adaptée à celle de la tige. L'extrémité de la tige 18 est adaptée à venir se visser dans un logement 20 ménagé au fond du manchon 11. La gaine 10, le manchon 11 et le boîtier 7 du capteur délimitent une chambre annulaire 22. Le piston 15 sépare le cylindre 13 en deux chambres opposées 23 et 25. La chambre 23 que l'on désignera ci-après par chambre de poussée, se trouve du côté de l'extrémité ouverte du cylindre 13. La chambre 25, que l'on désignera par chambre de recul, se trouve du côté de l'extrémité fermée du cylindre. Un canal 24 est ménagé dans la paroi latérale du cylindre. A une première extrémité, il débouche dans la chambre de recul 25.

A son extrémité opposée, le canal 24 débouche, lorsque le cylindre 13 est vissé à l'intérieur de son logement 17, dans une rainure 26 ménagée dans la paroi latérale de celui-ci. Deux canaux 27, 28 débouchent respectivement au fond du logement 17 et dans la rainure 26 et font communiquer les deux chambres opposées 23 et 25 du vérin constitué du cylindre 13 et du piston 15, avec un système hydraulique.

Ce système comporte par exemple un distributeur à quatre voies 31 d'un type connu. Deux des voies sont raccordées aux canalisations 27, 28. Les deux autres voies sont raccordées à deux canalisations 32, 33 qui sont connectées respectivement à l'entrée et à la sortie de moyens de pression hydraulique d'un type connu 34. La pression à l'entrée des moyens de pression 34 est maintenue égale à la pression statique régnant dans le puits au moyen d'un cylindre d'équilibrage de pression 35 où un piston 36 coulisse librement.

Sur une des faces du piston 36 est appliquée la pression régnant à l'extérieur du corps 1. Sur sa face opposée, est appliquée la pression régnant dans la canalisation 32.

Un système hydraulique pouvant être utilisé pour la manoeuvre du vérin de chaque ensemble de réception est décrit dans le brevet français 2.501.380 déjà cité.

Suivant le mode de réalisation de la figure 4, un canal axial 21 traverse le piston 15 et sa tige 18 de part en part et fait communiquer la chambre annulaire 22 délimitée par la gaine 10 et le manchon 11, avec la chambre de poussée 23.

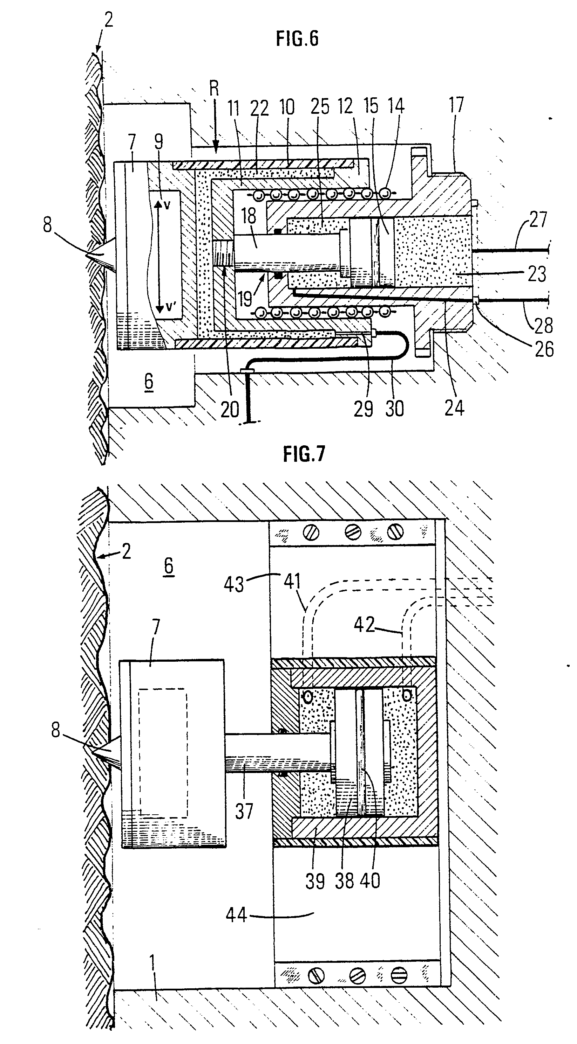

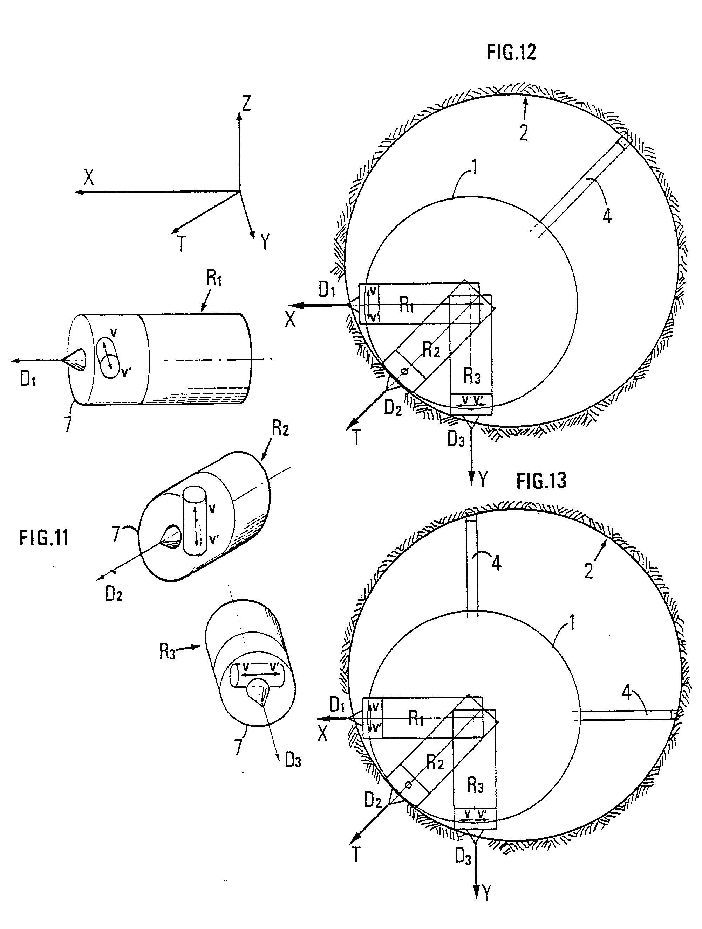

Suivant la variante de la figure 6, la chambre annulaire 22 ne communique pas avec la chambre de poussée. Elle est reliée par un canal 29 traversant l'épaulement 12 et une canalisation extérieure 30, avec des moyens non représentés d'application à ladite chambre d'un fluide à une pression au moins égale à la pression statique régnant dans le puits à la profondeur d'utilisation de la sonde. Si la pression statique extérieure est très élevée, le fluide utilisé est un liquide. Dans ce cas, la canalisation 30 est mise en communication avec le système hydraulique de manière qu'une pression au moins égale à la pression statique extérieure soit appliquée à l'intérieur de la chambre annulaire. Lorsque la profondeur d'utilisation de la sonde est relativement faible, le fluide alimentant la chambre annulaire 22 pourra être de l'air comprimé. Un mode de réalisation d'un système pneumatique adapté à fournir de l'air à la pression requise sera décrit ultérieurement en relation avec la figure 13. A certaines profondeurs d'utilisation de la sonde, la chambre annulaire 22 peut être alimentée par un mélange de liquide et de gaz.

Le mode de réalisation des figures 4, 5 et sa variante de la figure 6 fonctionnent de la manière suivante :

La sonde ayant été amenée à la profondeur choisie et appliquée contre la paroi du puits par ouverture du ou des bras d'ancrage (Figs 2, 3) et l'ensemble de réception étant dans la position de retrait représentée à la figure 4, l'électro-vanne 31 est positionnée pour mettre les canalisations 27, 28 respectivement en communication avec les canalisations 33, 32, de manière que la haute pression disponible à la sortie des moyens de pression 34, soit appliquée du côté de la chambre de poussée 23. L'ensemble du piston 15, du cylindre 13, de la gaine 10 et du boîtier 7, se déplace alors vers l'extérieur du corps 1 jusqu'à venir en contact avec la paroi du puits (Fig. 5).

La force de couplage Pa effectivement appliquée au boîtier 7 dépend du coefficient d'élasticité axiale de la gaine 10 qui transmet en se déformant la poussée hydraulique appliquée dans la chambre 23.

Suivant le mode de réalisation des figures 4, 5, la surpression hydraulique dans la chambre de poussée 23 est transmise à la chambre annulaire 22 par le canal 21 de la tige du piston. L'application de cette surpression au boîtier 7 contribue à accroître la force d'application engendrée principalement par le vérin.

Suivant la variante de la figure 6, une pression légèrement supérieure à la pression statique extérieure est de préférence appliquée dans la chambre annulaire 22 par l'intermédiaire de la canalisation 30, de manière à tendre la gaine 10 et accroître la force d'application effective du boîtier contre la paroi du puits.

Dans les deux cas, le retrait du boîtier à l'intérieur de la cavité 6 est effectué en mettant les canalisations 27, 28 respectivement en communication au moyen de l'électro-vanne 31, avec les canalisations 32, 33, de manière que la haute pression à la sortie des moyens de pression hydrauliques 34 soit transmise à la chambre de recul 25.

L'orientation du capteur 9 à l'intérieur de son boîtier 7 dépend du fluide utilisé dans la chambre annulaire 22.

Si la chambre de poussée 23 et la chambre annulaire 22 communiquent par le canal 21 (Figs 4, 5) ou si le fluide utilisé dans la chambre annulaire 22 est un liquide, le capteur 9 est disposé de manière que sa direction principale d'oscillation V V' soit dans le plan orthogonal à la direction de la force d'ancrage contre la paroi du puits. De cette manière, le capteur ne détecte pratiquement que les vibrations qui lui sont directement appliquées au travers de la paroi du puits. La fixation du boîtier 7 en porte-à-faux à l'extrémité de la gaine élastique 10 a pour effet que la masse de la sonde n'affecte pas la fréquence à laquelle résonne le capteur 9 lorsqu'il est couplé à la paroi et que les vibrations parasites du corps de la sonde ne sont transmises que très faiblement au capteur.

Lorsque la chambre de poussée 23 est isolée de la chambre annulaire 22 (Fig. 6) et si les conditions d'utilisation de la sonde permettent l'emploi d'un gaz pour établir la surpression requise, le capteur peut éventuellement être orienté à l'intérieur du boîtier 7, de manière que sa direction principale d'oscillation V V' soit parallèle à la direction de la force d'application contre la paroi du puits. Dans ce cas, l'élasticité de la gaine élastique et l'élasticité du gaz interviennent parallèlement pour supprimer les vibrations parasites pouvant être transmises par l'intermédiaire du corps de la sonde.

Suivant le second mode de réalisation des figures 7 à 9, le boîtier 7 est fixé à la tige 37 d'un vérin comportant un piston 38 solidaire de la tige, un cylindre 39 de section intérieure adaptée à la section du piston, un joint d'étanchéité 40 pour isoler l'une de l'autre les parties du cylindre de part et d'autre du piston et un système hydraulique analogue à celui employé pour le mode de réalisation des figures 4 à 6 (et non représenté), qui communique avec les deux parties terminales dudit cylindre au moyen de deux canalisations souples 41, 42.

Dans ce mode de réalisation, c'est l'ensemble du boîtier 7 et du vérin associé qui est relié au corps de la sonde 1 par des moyens élastiques.

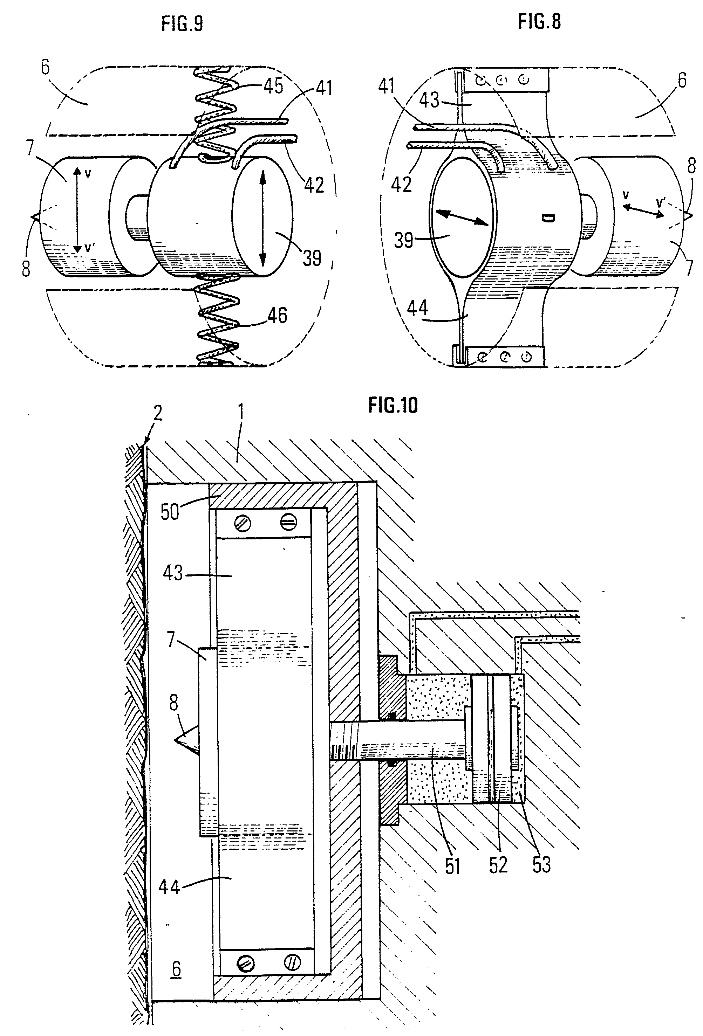

Ces moyens comportent par exemple (Figs. 7, 8) deux plaques minces d'élastomère 43, 44 fixées au cylindre suivant deux génératrices diamétralement opposées d'une part, et à la paroi de la cavité 6 d'autre part, de manière qu'elles soient toutes les deux dans un plan vertical.

Les moyens élastiques de suspension peuvent également comporter (Fig. 9) deux ressorts hélicoïdaux 45, 46 fixés d'une part à deux faces diamétralement opposées du cylindre 39 et d'autre part à la paroi de la cavité 6, de manière que leurs axes d'oscillation soient alignés suivant la verticale.

Le couplage du boîtier 7 contre la paroi du puits et son retrait sont effectués, comme pour le mode de réalisation précédent, en appliquant au moyen du système hydraulique, une pression différentielle alternativement d'un côté ou de l'autre du piston 38 du vérin.

Le mode de réalisation des figures 7, 8 est utilisé pour les applications où la direction d'oscillation V V' du capteur est perpendiculaire au plan vertical contenant les plaques d'élastomère 43, 44. Les dimensions de ces plaques sont choisies pour qu'elles aient une forte raideur suivant leur plan vertical et une faible raideur suivant la direction d'oscillation du capteur. De cette manière, la force d'application du boîtier contre la paroi du puits est sensiblement égale à la poussée du vérin, mais les vibrations parasites auxquelles le corps de la sonde peut être soumis suivant la direction d'oscillation V V' du capteur ne sont pratiquement pas transmises à ce dernier.

La variante de la figure 9 convient particulièrement pour les applications où la direction V V' d'oscillation du capteur est verticale, la flexibilité des ressorts intervenant pour amortir les vibrations parasites verticales qui pourraient lui être transmises par l'intermédiaire du corps.

On peut également utiliser un matériau composite à structure orientée dont le module d'élasticité est anisotrope, comme par exemple un matériau fibreux. Un tel matériau présente une grande élasticité dans le plan transversal aux fibres et une grande rigidité suivant la direction d'allongement des fibres. Les plaques 43, 44 du mode de réalisation des figures 7, 8 sont découpées dans un tel matériau et orientées pour que les fibres soient parallèles à l'axe du vérin. Les ressorts hélicoïdaux de la variante de la figure 9, peuvent également être remplacées par des plaques découpées de manière telle que leur rigidité soit faible suivant la verticale et élevée dans le plan horizontal.

Suivant le mode de réalisation de la figure 10, le boîtier 7 est relié directement aux moyens élastiques constitués de deux plaques 43, 44 réalisées également en élastomère ou en matériau composite. Les plaques sont fixées au boîtier 7 suivant deux génératrices diamétralement opposées de celui-ci d'une part et d'autre part à deux faces opposées d'une pièce rigide 50 de section adaptée à la section de la cavité 6 du corps et déplaçable dans celle-ci. La pièce 50 est solidaire d'une tige 51 fixée à un piston 52 adapté à coulisser dans un cylindre 53 disposé radialement dans le corps de sonde 1, sous l'action d'un système hydraulique analogue à celui employé pour le mode de réalisation des figures 4 à 6.

Le boîtier est entraîné par le déplacement du piston et par l'intermédiaire de la pièce rigide 50, depuis une position de retrait jusqu'à une position d'ancrage contre la paroi du puits. De la même manière le capteur est orienté dans son boîtier 7, de façon que son axe d'oscillation soit sensiblement parallèle à la direction suivant lesquelles les plaques ont la plus grande élasticité.

Ce mode de suspension est avantageux dans la mesure où, le vérin de manoeuvre 51, 52 est ici soutenu par le corps de sonde et où la masse suspendue aux moyens élastiques se réduit à celle du boîtier 7.

La sonde peut comporter un seul ensemble capteur choisi parmi les ensembles précédemment décrits ou plusieurs en combinaison, orientés suivant une direction préférentielle.

Un mode préféré d'agencement consiste à disposer plusieurs desdits ensembles dans des logements appropriés de la sonde 1, de manière que les capteurs qu'ils contiennent soient orientés suivant des directions différentes.

Sur la figure 11, trois des ensembles de réception précédents sont orientés respectivement suivant trois directions parallèles à trois axes OXYT d'un plan horizontal, les axes OX et OY étant perpendiculaires et l'axe OT étant la bissectrice de l'angle XOY. L'axe de déplacement du boîtier d'un premier ensemble RI des trois ensembles de réception est dirigé suivant une direction D1 parallèle à OX et l'axe d'oscillation V V' du capteur est orienté suivant une direction parallèle à l'axe OY. Un second ensemble R2 est disposé à un niveau différent du corps de la sonde et l'axe de déplacement du boîtier 7 correspondant est dirigé suivant une direction D2 parallèle à OT. L'axe d'oscillation V V' du capteur qui y est contenu est dirigé suivant une direction parallèle à OZ. Le troisième ensemble R3 est disposé par exemple à un niveau inférieur à celui du second. L'axe de déplacement du boîtier 7 est orienté suivant une direction D3 parallèle à OY et l'axe d'oscillation V V' du capteur est choisi parallèle à OX.

Les trois ensembles de réception R1 R2 R3 sont disposés par rapport au corps 1 de la sonde de manière que par action sur leurs vérins, les faces d'application respectives des trois boîtiers 7 contenant les capteurs viennent en contact avec la paroi du puits (Figs 12, 13). La course des vérins est également choisie pour que le contact ait lieu, même pour les puits de diamètre beaucoup plus grand que celui de la sonde. Pour améliorer le couplage, on peut donner à la face d'application des boîtiers une forme arrondie.

Dans le mode d'agencement de la figure 12, la direction OT, suivant laquelle est aligné l'ensemble récepteur R2, se trouve dans le plan d'ouverture du bras d'ancrage 4. Dans le mode d'agencement de la figure 13, les directions OX et OY suivant lesquelles sont alignés les ensembles récepteurs R1 et R3 sont dans les plans d'ouverture orthogonaux entre eux de deux bras d'ancrage 4.

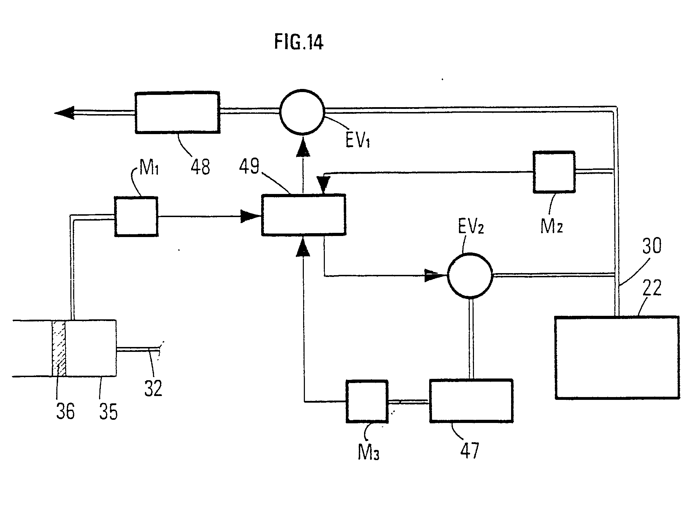

Le système pneumatique permettant de porter la chambre annulaire 22 de l'ensemble récepteur de la figure 6 à une pression légèrement supérieure à la pression statique régnant dans le puits à la profondeur d'utilisation, comporte par exemple (Fig. 14) un réservoir d'air comprimé 47, dont la pression a été portée, avant la descente de la sonde dans le puits, à une pression très supérieure à la pression statique maximale qu'il est possible d'observer dans les conditions normales d'utilisation. Ce réservoir est connecté par l'intermédiaire d'une électro-vanne EV2 à deux voies.

La canalisation 30 est également connectée à un manomètre M2 et, par l'intermédiaire d'une électro-vanne à deux voies EV1, à un filtre à air 48 facilitant l'expulsion d'air à l'extérieur de la sonde. La pression à l'intérieur du réservoir 47 est mesurée par un manomètre M3. La pression statique régnant dans le puits est mesurée en connectant le cylindre d'équilibrage de pression statique 35 (Fig. 6) à un manomètre MI. Les tensions électriques développées par les manomètres MI, M2, M3, en réponse aux pressions qu'ils mesurent, sont appliquées à un micro-calculateur 49 d'un type connu, adapté à engendrer des signaux de commande des électro-vannes EV1, EV2, selon la pression régnant dans la chambre 22 et la canalisation 30.

Si la pression à l'intérieur de la chambre 22 de chaque ensemble récepteur R devient inférieure à la pression statique extérieure, du fait que la profondeur d'utilisation de la sonde augmente, le calculateur 49 commande l'ouverture de l'électro-vanne EV2 de manière à rétablir une légère surpression. Si cette surpression augmente trop, en raison d'une remontée de la sonde, le calculateur 49 commande l'ouverture de l'électro-vanne EVI pour que l'air excédentaire soit évacué hors de la chambre 22.

Lorsque la pression dans le réservoir 47 baisse trop du fait que l'air qu'il contient a peu à peu été utilisé pour rétablir la surpression requise dans la chambre annulaire 22 des ensembles récepteurs, et descend au-dessous d'un seuil préétabli, le calculateur 49 engendre un signal d'alerte. La sonde est alors remontée et le réservoir 47 rechargé.

## Revendications

1. Dispositif de réception d'ondes acoustiques adapté à être associé à une sonde (1) descendue dans un puits ou forage (2) à l'extrémité d'un câble (3) et comportant au moins un bras mobile d'ancrage (4), l'ouverture dudit bras poussant la sonde contre la paroi du puits ou forage, ce dispositif comportant au moins un ensemble récepteur (R), et un vérin associé à des moyens de pression pour déplacer chaque ensemble récepteur entre une position de retrait et une position où il est couplé avec la paroi du puits, caractérisé en ce que chaque ensemble récepteur a son axe principal d'oscillation (VV') orienté suivant une direction perpendiculaire à l'axe du vérin, le dispositif comportant des éléments de suspension flexibles directifs pour amortir les vibrations transmises par la sonde à chaque ensemble récepteur au moins suivant ledit axe principal d'oscillation.

2. Dispositif de réception selon la revendication 1, dans lequel le corps (13) du vérin est solidaire de la sonde, à une première extrémité, caractérisé en ce que le piston (15) dudit vérin est connecté à l'ensemble récepteur par l'intermédiaire d'un manchon (11) adapté à coulisser sur le corps (13) dudit vérin et d'un élément de suspension flexible comportant une gaine tubulaire (10) de section supérieure à celle du manchon qui délimite avec celui-ci et l'ensemble récepteur une chambre annulaire (22) et les moyens de pression comportent un système hydraulique pour la manoeuvre dudit vérin.

3. Dispositif de réception selon la revendication 2, caractérisé en ce que le système hydraulique est adapté à établir séparément dans la chambre annulaire (22) une pression supérieure à la pression statique régnant à l'extérieur de la sonde, lorsque l'ensemble récepteur est couplé avec la paroi du puits.

4. Dispositif de réception selon la revendication 2, caractérisé en ce que les moyens de pression comportent également un système pneumatique pour maintenir dans la chambre annulaire (22) une pression légèrement supérieure à la pression statique régnant à l'extérieur de la sonde.

5. Dispositif de réception selon la revendication 1, caractérisé en ce que chaque ensemble récepteur (R) est solidaire du piston (15) du vérin, le corps de celui-ci étant suspendu dans une cavité de la sonde par les éléments flexibles directifs de suspension.

6. Dispositif de réception selon la revendication 5, caractérisé en ce que les éléments de suspension flexibles directifs sont des plaques (43, 44) en matériau élastique disposées parallèlement à l'axe de vérin.

7. Dispositif de réception selon la revendication 5, caractérisé en ce que Les éléments de suspension flexibles directifs sont des ressorts (45, 46).

8. Dispositif de réception selon la revendication 6, caractérisé en ce que l'axe d'oscillation de l'ensemble récepteur est perpendiculaire aux plaques (43, 44) en matériau élastique.

9. Dispositif de réception selon la revendication 7, caractérisé en ce que l'axe d'oscillation de l'ensemble récepteur est parallèle à la direction principale de déformation des ressorts (45, 46).

10. Dispositif de réception selon la revendication 1, caractérisé en ce que chaque ensemble récepteur est connecté par des éléments flexibles de suspension à une pièce rigide (50) fixée à la tige (51) dudit vérin.

11. Dispositif de réception selon les revendications 5 ou 10, caractérisé en ce que les éléments flexibles de suspension sont réalisés à partir de matériaux composites dont le module d'élasticité est anisotrope, l'axe d'oscillation de chaque ensemble récepteur étant disposé parallèlement à la direction de flexion maximale desdits éléments de suspension.

12. Dispositif de réception selon l'une des revendications précédentes, caractérisé en ce qu'il comporte plusieurs ensembles récepteurs (R1, R2, R3) adaptés à être couplés par intermittence avec la paroi du puits, les axes d'oscillation desdits ensembles récepteurs étant orthogonaux les uns par rapport aux autres.

13. Dispositif de réception selon la revendication 11, caractérisé en ce qu'il comporte au moins trois ensembles récepteurs, les axes des vérins de ces trois ensembles étant orientés à 45 degrés les uns par rapport aux autres.

## Claims

1. Device for receiving sound waves and designed to be associated with a probe (1) lowered into a well or bore hole (2) at the end of a cable (3) and comprising at least one mobile arm used for anchorage (4), the said arm, when opened, pushing the probe against the wall of the well or bore hole, this device comprising at least one receiver unit (R) and an actuator associated with a pressuring system to move each receiver unit between a retracted position and a position where it is in contact with the wall of the well, characterised in that each receiver unit has its principal axis of oscillation (VV') arranged in accordance with a direction perpendicular to the axis of the actuator, the device comprising directional flexible suspension elements used to dampen the vibrations transmitted by the probe to each receiver unit, at least along the said principal axis of oscillation.

2. Receiving device in accordance with claim 1, in which the body (13) of the actuator is integral with the probe, at one end, characterised in that the piston (15) of the said actuator is connected to the receiver unit by means of a sleeve (11) designed to slide on the body (13) of the said actuator and a flexible suspension element comprising a tubular sheath (10), its cross section exceeding that of the sleeve, this defining, together with it and the receiver unit, an annular chamber (22), the means of applying pressure comprising an hydraulic system for operating the said actuator.

3. Receiving device in accordance with claim 2, characterised in that the hydraulic system is designed to establish, separately, in the annular chamber (22), a pressure exceeding the static pressure existing external to the probe, when the receiver unit is in contact with the wall of the well.

4. Receiving device in accordance with claim 2, characterised in that the means of pressurisation also comprises a pneumatic system to maintain, in the annular chamber (22), a pressure slightly greater than the static pressure existing external to the probe.

5. Receiving device in accordance with claim 1, characterised in that each receiver unit (R) is integral with the piston (15) of the actuator, the body of this unit being suspended in a cavity forming part of the probe using directional flexible elements for suspension.

6. Receiving device in accordance with claim 5, characterised in that the directional flexible suspension elements are plates (43, 44) made from a flexible material and arranged parallel to the axis of the actuator.

7. Receiving device in accordance with claim 5, characterised in that the directional flexible suspension elements are in the form of springs (45, 46).

8. Receiving device in accordance with claim 6, oharacterised in that the axis of oscillation for the receiver unit is perpendicular to the plates (43, 44) made from a flexible material.

9. Receiving device in accordance with claim 7, characterised in that the axis of oscillation of the receiver unit is parallel to the principal direction of deformation of the spring (45, 46).

10. Receiving device in accordance with claim 1, characterised in that each receiver unit is connected by flexible suspension elements to a rigid part (50) fixed to the rod (51) of the said actuator.

11. Receiving device in accordance with claims 5 or 10, characterised in that the flexible suspension elements are made from composite materials, the moduli of elasticity being anisotropic, the axis of oscillation of each receiving unit being arranged parallel to the direction of maximum flexure of the said suspension elements.

12. Receiving device in accordance with one of the preceding claims, characterised in that it comprises several receiver units (R1, R2, R3) designed to be in intermittent contact with the wall of the well, the axes of oscillation of the said receiver units being orthogonal to each other.

13. Receiving device in accordance with claim 11, characterised in that it comprises at least three receiver units, the axes of the actuators for these three units being arranged at 45 degrees relative to each other.

**Patentansprüche**

1. Gerät zum Empfang akustischer Wellen, das zur Zuordnung zu einer Sonde (1) ausgebildet ist, die in ein Bohrloch oder eine Bohrung (2) am Ende eines Kabels (3) hinabgelassen wird und wenigstens einen beweglichen Verankerungsarm (4) umfaßt, wobei das Öffnen dieses Armes die Sonde gegen die Wandung von Bohrloch oder Bohrung drückt, das Gerät wenigstens eine Empfängeranordnung (R) und einen Druckeinrichtungen zugeordneten Zylinder umfaßt, um jede Empfängeranordnung zwischen einer zurückgezogenen Stellung und einer Stellung zu bewegen, wo sie mit der Wandung des Bohrlochs gekoppelt ist, dadurch gekennzeichnet, daß jede Empfängeranordnung mit ihrer Hauptschwingungsachse (VV') in einer Richtung senkrecht zur Achse des (Stell) zylinders orientiert ist und das Gerät flexible Aufhängungselemente mit Richtwirkung umfaßt, um die durch die Sonde auf jede Empfängeranordnung übertragenen Vibrationen wenigstens längs der Hauptschwingungsachse zu dämpfen.

2. Empfangsgerät nach Anspruch 1, bei dem das Gehäuse (13) der Zylinderanordnung fest mit der Sonde an einem ersten Ende verbunden ist, dadurch gekennzeichnet, daß der Kolben (15) dieser Zylinderanordnung mit der Empfängeranordnung über eine Hülse (11) verbunden ist, die so ausgebildet ist, daß sie auf dem Gehäuse (13) dieser Zylinderanordnung gleitet und mittels eines flexiblen Aufhängeelementes mit einer röhrenförmigen Hülle (10) verbunden ist, deren Querschnitt größer als der der Hülse ist, die mit dieser und der Empfängeranordnung eine Ringkammer (22) begrenzt, und die Druckeinrichtungen ein hydraulisches System zur Betätigung dieser Zylinderanordnung umfassen.

3. Empfangsgerät nach Anspruch 2, dadurch gekennzeichnet, daß das hydraulische System so ausgebildet ist, daß es getrennt in dieser Ringkammer (22) einen Druck größer als der außerhalb der Sonde herrschende statische Druck herstellt, wenn die Empfängeranordnung mit der Bohrlochwandung gekoppelt ist.

4. Empfangsgerät nach Anspruch 2, dadurch gekennzeichnet, daß die Druckeinrichtungen ebenfalls ein pneumatisches System umfassen, um in der Ringkammer (22) einen Druck aufrecht zu erhalten, der geringfügig höher als der außerhalb der Sonde herrschende statische Druck ist.

5. Empfangsgerät nach Anspruch 1, dadurch gekennzeichnet, daß jede Empfängeranordnung (R) fest mit dem Kolben (15) der Zylinderanordnung ist, wobei deren Gehäuse in einem Hohlraum der Sonde durch die flexiblen Aufhängeelemente mit Richtwirkung aufgehängt ist.

6. Empfangsgerät nach Anspruch 5, dadurch gekennzeichnet, daß die flexiblen Aufhängeelemente mit Richtwirkung Platten (43, 44) aus elastischem Material sind, die parallel zur Achse der Zylinderanordnung angeordnet sind.

7. Empfangsgerät nach Anspruch 5, dadurch gekennzeichnet, daß die flexiblen Aufhängeelemente mit Richtwirkung Federn (45, 46) sind.

8. Empfangsgerät nach Anspruch 6, dadurch gekennzeichnet. daß die Schwingungsachse der Empfängeranordnung senkrecht zu den Platten (43, 44) aus elastischem Material ist.

9. Empfangsgerät nach Anspruch 7, dadurch gekennzeichnet, daß die Schwingungsachse der Empfängeranordnung parallel zur Hauptverformungsrichtung der Federn (45, 46) ist.

10. Empfangsgerät nach Anspruch 1, dadurch gekennzeichnet, daß jede Empfängeranordnung über flexible Aufhängeelemente mit einem steifen an der Stange (51) dieser Zylinderanordnung befestigten Bauteil verbunden ist.

11. Empfangsgerät nach den Ansprüchen 5 oder 10, dadurch gekennzeichnet, daß die flexiblen Aufhängeelemente aus Verbundmaterialien hergestellt sind, deren Elastizitätsmodul anisotrop ist, wobei die Schwingungsachse jeder Empfängeranordnung parallel zur maximalen Biegerichtung dieser Aufhängeelemente angeordnet ist.

12. Empfangsgerät nach einem der vorhergehenden Ansprüche, · dadurch gekennzeichnet, daß sie mehrere Empfängeranordnungen (R1, R2, R3) umfaßt, die so ausgebildet sind, daß sie intermittierend mit der Wandung des Bohrlochs koppelbar sind, wobei die Schwingungsachsen dieser Empfängeranordnungen zueinander orthogonal sind.

13. Empfangsgerät nach Anspruch 11, dadurch gekennzeichnet, daß sie wenigstens drei Empfängeranordnungen umfaßt, wobei die Achsen der (Stell)zylinder dieser drei Anordnungen unter 45° zueinander orientiert sind.

FIG.1

FIG.2

FIG.3

1

**FIG.4**

**FIG.5**

FIG.6

FIG.7

FIG.9

FIG.8

FIG.10

FIG.12

FIG.13

FIG.11

FIG.14